# EUROPEAN PATENT APPLICATION

(11) **EP 1 752 673 A1**
(43) Date of publication of application: **14.02.2007**
(21) Application number: 06003504.5
(22) Date of filing: 21.02.2006
(51) Int. Cl.: F16D 49/16, F16D 49/18

(54) **Disk brake system**

(30) Priority: 11.08.2005 KR 2005073699
(71) Applicant: Kim, Young Hee, Saha-gu Busan (KR)
(72) Inventor: Kim, Young Hee, Saha-gu Busan (KR)
(74) Representative: Hano, Christian

(57) **Abstract**

Provided is a disk brake system for automotive vehicles capable of pressing a brake pad (30) against a circumferential surface of a brake disk (10) in a braking operation, thus making sure that heat can be readily dissipated from a friction surface with a minimized possibility of thermal deformation of the brake disk, which would otherwise cause a judder phenomenon to the disk, thereby assuring a stabilized braking operation, an improved braking performance and a reduced weight of the brake system. The disk brake system includes a disk (10) with a circumferential braking surface, a caliper (20) having a wheel cylinder and a piston extendibly received in the wheel cylinder, and a brake pad (30) attached to a frontal end of the piston in a confronting relationship with the circumferential surface of the disk for making contact with the circumferential surface of the disk in response to actuation of the piston.

## Description

### BACKGROUND OF THE INVENTION

### 1. Field of the Invention

The present invention pertains to a disk brake system for automotive vehicles and, more specifically, to a high performance disk brake system for automotive vehicles of the type designed to press a brake pad against a circumferential surface of a brake disk in a braking operation, thus making sure that heat can be readily dissipated from a friction surface with a minimized possibility of thermal deformation of the brake disk, which would otherwise cause a judder phenomenon to the disk, thereby assuring a stabilized braking operation, an improved braking performance and a reduced weight of the brake system.

### 2. Description of the Related Art

Conventional disk brakes generates a braking force by bringing a pair of brake pads into frictional contact with the opposite side surfaces of a brake disk that rotates together with a vehicle wheel. The power by which the brake pads are pressed against the brake disk is provided by means of a sliding piston mounted to a caliper, which piston is actuated with a fluid pressure offered from a master cylinder.

Under a normal travel condition, the disk brakes repeatedly perform braking operations each time of which the brake disk is subjected to heating and dissipates the heat through conduction and convection.

Most of the kinetic energy created in the travel process of an automotive vehicle is converted to frictional heat in the brake disk when the disk brakes work, which leads to abrupt increase of the temperature at the contact surfaces of the disk and the brake pads. Such a frictional heat generated in between the disk and the brake pads tends to pose problems, including thermal deformation of the disk.

Specifically, the disk is usually made of gray cast iron and has residual stresses created during the casting process. As it makes frictional contact with the brake pads, the disk may suffer from thermal deformation, a major culprit of juddering phenomenon, which results in an irregular wear of the disk and a shortened life span or failure of the brake.

The juddering phenomenon noted above stems not only from the heat but also from the fact that, in the state-of the-art brake device, the brake disk is pressed at its opposite side surfaces by the brake pads.

This type of brake device is disclosed in a variety of prior art references, inclusive of Korean Patent Laid-open Publication No. 2005-56494. The disk brakes disclosed exhibit excellent heat dissipation property and stable braking ability and are simple in structure thus allowing brake pads to be replaced or repaired with ease. Despite such advantages, the disk brakes are problematic in that they have a reduced friction area and therefore require the use of large-sized brake pads and an increased pedal depressing force.

In view of such problems, Korean Patent Laid-open Publication No. 2004-102232 teaches a disk brake that has a plurality of external brake pads in an effort to enlarge the contact area and thus enhance the braking force.

With the above-noted and other disk brakes, if a driver depresses a brake pedal to generate a braking force, a master cylinder feeds hydraulic flow to wheel cylinders so that pistons can be extended out of the wheel cylinders. The pistons are provided at their distal ends with backup plates and brake pads adapted to press the opposite side surfaces of a brake disk in response to the extending movement of the pistons. However, the conventional disk brakes referred to above fail to provide a sweeping solution to the phenomena of irregular wear and resultant juddering that may occur due to the thermal deformation of a disk in the process of frictional contact with the brake pads. Once the juddering phenomenon takes place, the driver should visit a service factory to either replace the brake pads or cut the deformed disk into a normal shape for removal of the irregular wear, which makes the driver feel inconvenient and cumbersome.

As a solution to this problem, it has been proposed in, e.g., Korean Patent Laid-open Publication No. 2002-51719 that, in response to the detection of judder by a vibration sensor employed in an Anti-lock Brake System ("ABS"), a control unit controls a hydraulic control part to open or close a solenoid valve of the corresponding wheel thereby causing the brake pads to move away from the disk and eliminating the judder.

This solution has a drawback in that it is hard to apply the vibration sensor-based judder preventing arrangement to a brake device that employs no anti-lock brake system.

Turning to a drum type brake device, it has a pair of brake shoes each with a brake lining that can be brought into frictional contact with an inner circumference of a brake drum by the action of wheel cylinders to perform a braking operation. The drum type brake device is less costly than the disk brake but involves a number of shortcomings, i.e., bad heat dissipation property, complicated structure, reduced accessibility for maintenance and weakened self-cleaning action. This is mainly because the braking operation is done within a closed space of the brake drum.

In due consideration of the problems set forth above, a need has existed for a new brake device that can avoid a judder phenomenon often caused by the thermal deformation of a disk in the prior art brake system and can increase the contact area of brake pads to thereby make greater the braking force.

### SUMMARY OF THE INVENTION

Taking into account the afore-mentioned and other problems inherent in the prior art brake devices, it is an object of the present invention to provide a high performance disk brake system for automotive vehicles capable of pressing a brake pad against a circumferential surface of a brake disk in a braking operation, thus making sure that heat can be readily dissipated from a friction surface with a minimized possibility of thermal deformation of the brake disk, which would otherwise cause a judder phenomenon to the disk, thereby assuring a stabilized braking operation, an improved braking performance and a reduced weight of the brake system.

Another object of the present invention is to provide a high performance disk brake system for automotive vehicles that makes up for the drawbacks of a drum type brake device, while keeping intact the advantages of a disk type brake device.

In accordance with the present invention, there is provided a disk brake system for automotive vehicles, comprising: a disk with a circumferential braking surface; a caliper having a wheel cylinder and a piston extendibly received in the wheel cylinder; and a brake pad attached to a frontal end of the piston in a confronting relationship with the circumferential surface of the disk for making contact with the circumferential surface of the disk in response to actuation of the piston.

In the disk brake system of the present invention, the caliper and the brake pad may cooperate with each other to form a braking part and the braking part may be at least one in number.

In the disk brake system of the present invention, the braking part may be disposed in plural numbers in the vicinity of top, bottom, left and right peripheral edges of the disk.

In the disk brake system of the present invention, the disk may comprise a circular disk body, to the center of which a driving shaft is coupled, and an annular cylinder part extending in an axial direction from a periphery of the disk body to provide a circumferential surface of increased contact area with which the brake pad makes contact.

In the disk brake system of the present invention, the brake pad may have a curvature of radius corresponding to that of the circumferential surface of the annular cylinder part and may extend a predetermined length along the circumferential surface of the annular cylinder part.

In the disk brake system of the present invention, the circumferential surface of the annular cylinder part and the brake pad may be formed in a complementary recess-and-protrusion shape to increase a contact area between the annular cylinder part and the brake pad.

In the disk brake system of the present invention, the disk may be of a drum shape.

According to the disk brake system set forth above, a brake pad is adapted to be pressed against a circumferential surface of a brake disk in a braking operation. This makes sure that heat is readily dissipated from a friction surface with a minimized possibility of thermal deformation of the brake disk, which would otherwise cause a judder phenomenon to the disk, thereby assuring a stabilized braking operation, an improved braking performance and a reduced weight of the brake system.

### BRIEF DESCRIPTION OF THE DRAWINGS

The above and other objects, features and advantages of the present invention will become apparent from the following description of preferred embodiments given in conjunction with the accompanying drawings, in which:
FIG. 1 is a schematic cross-sectional view showing a disk brake system according to a first embodiment of the present invention;
FIG. 2 is a schematic side elevational view showing a disk brake system according to a second embodiment of the present invention;
FIG. 3 is a schematic cross-sectional view showing a disk of alternative configuration to which is applied the brake system according to the first embodiment of the present invention; and
FIGS. 4a through 4d are cross-sectional views illustrating a variety of modified shapes of a circumferential surface of a disk.

### DETAILED DESCRIPTION OF THE INVENTION

Now, the present invention will be described in detail with reference to the accompanying drawings.

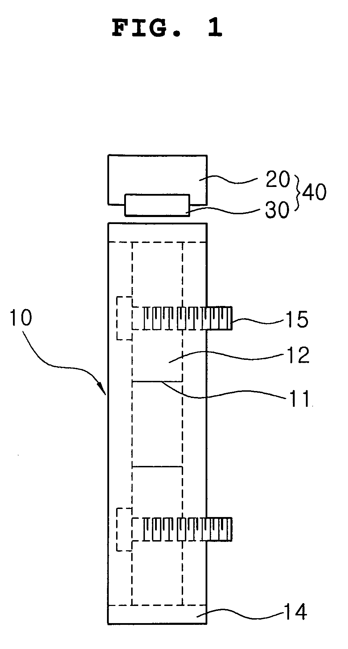

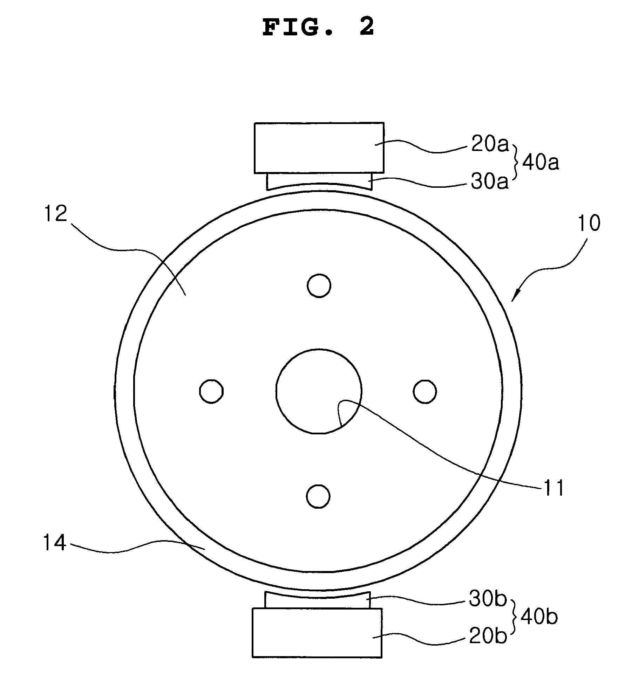

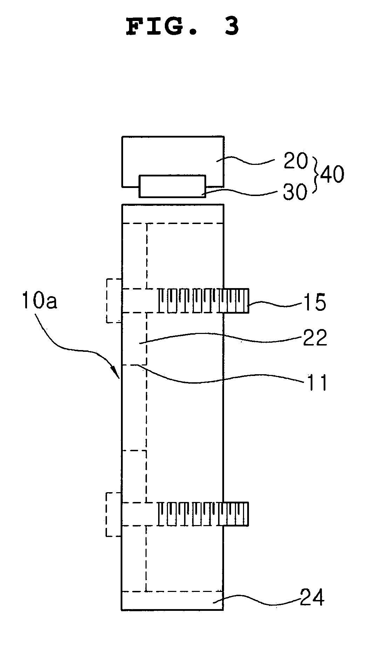

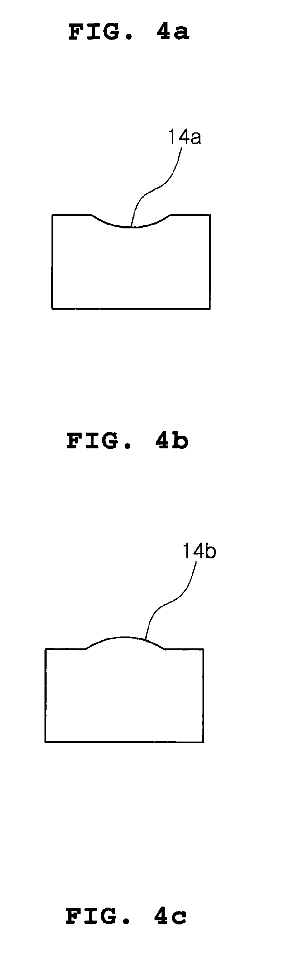

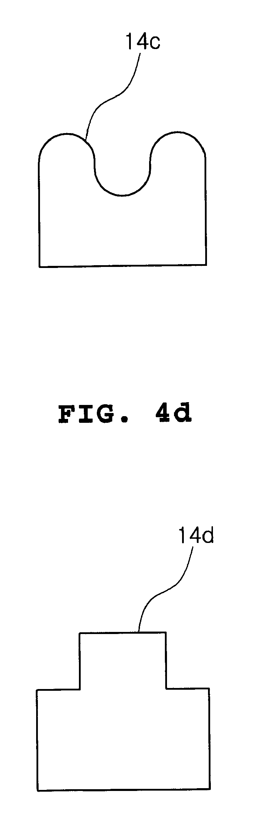

FIG. 1 is a schematic cross-sectional view showing a disk brake system according to a first embodiment of the present invention, FIG. 2 is a schematic side elevational view showing a disk brake system according to a second embodiment of the present invention, FIG. 3 is a schematic cross-sectional view showing a disk of alternative configuration to which is applied the brake system according to the first embodiment of the present invention, and FIGS. 4a through 4d are cross-sectional views illustrating a variety of modified shapes of a circumferential surface of a disk.

Referring first to FIG. 1, a disk brake system according to a first embodiment of the present invention includes a disk 10 with a circumferential braking surface, a caliper 20 having a wheel cylinder and a hydraulically actuated piston received in the wheel cylinder, and a brake pad 30 attached to a frontal end of the piston in a confronting relationship with the circumferential surface of the disk 10 for making contact with the circumferential surface of the disk 10 in response to actuation of the piston.

The caliper 20 is mounted on, e.g., a knuckle or an arm of an automotive vehicle, and has a hydraulic operation mechanism well-known in the art. Specifically, in response to a driver depressing a brake pedal, a master cylinder generates and feeds a fluid pressure to the wheel cylinder which in turn causes the piston having the brake pad 30 at its distal end to be extended outwardly. Preferably, the brake pad 30 is supported by a backup plate that remains fixedly secured to the distal end of the piston.

The disk 10 is provided with a circular disk body 12 and an annular cylinder part 14 extending in an axial direction from a periphery of the disk body 12 to provide a circumferential surface of increased contact area with which the brake pad makes contact. The circular disk body 12 has a center bore 11 to which a driving shaft or a spindle is coupled and is provided with a plurality of hub bolts 15 attached thereto. In the first embodiment, the disk 10 is of symmetrical configuration about a vertical center plane.

The disk brake system of the first embodiment includes a single braking part 40 composed of the caliper 20 and the brake pad 30. In this case, the braking part 40 may be disposed at any of top, bottom, left and right positions with respect to the disk 10. The brake pad 30 has a curvature of radius corresponding to that of the circumferential surface of the annular cylinder part 14 of the disk 10 and extends a predetermined length along the circumferential surface of the annular cylinder part 14.

In the meantime, the disk brake system of the second embodiment shown in FIG. 2 includes a first braking part 40a and a second braking part 40b disposed at diametrically opposite positions. The first braking part 40a includes a first caliper 20a having a wheel cylinder and a hydraulically actuated piston received in the wheel cylinder, and a first brake pad 30a attached to a frontal end of the piston in a confronting relationship with the circumferential surface of the disk 10 for making contact with the circumferential surface of the disk 10 in response to actuation of the piston. Similarly, the second braking part 40b includes a second caliper 20b and a second brake pad 30b.

As illustrated in FIG. 2, the first braking part 40a and the second braking part 40b are disposed with an angular spacing of 180 degrees with each other but, instead, may be disposed at any position spaced apart with the same angle from a vertical center line of the disk 10.

The first braking part 40a and the second braking part 40b have the same structure and operation principle as the braking part 40 employed in the disk brake system of the first embodiment. The first and second brake pads 30a, 30b of the first braking part 40a and the second braking part 40b may have a length shorter than that of the brake pad 30 employed in the disk brake system of the first embodiment.

Although the disk brake systems of the first and second embodiments include one or two braking part, it would be possible to employ three braking parts 40, 40a, 40b in combination to maximize the braking force. Also possible is to use two pairs of braking parts disposed at a predetermined spacing. In this case, the plurality of braking parts may be disposed at any of top, bottom, left and right positions around the disk 10 rather than those positions spaced apart with the same angle from a vertical center line of the disk 10.

Instead of the disk 10 of the first and second embodiments whose cylinder part 14 symmetrically extends from the disk body 12, it is possible to use a drum type disk 10a having a cylinder part 24 extending to only one side from the periphery of a disk body 22 as shown in FIG. 3.

Like elements in FIG. 3 are designated with the same reference numerals as in FIGS. 1 and 2 and no description will be offered regarding them for the sake of simplicity.

Operations of the disk brake system will be set forth hereinbelow.

In the brake system of the first embodiment, if a driver depresses the brake pedal, the master cylinder feeds a fluid pressure to the wheel cylinder, in response to which the wheel cylinder causes the piston of the caliper 20 to be extended outwardly, thus bringing the brake pad 30 attached to the distal end of the piston into frictional contact with the circumferential surface of the cylinder part 14 of the disk 10 to thereby perform a braking operation.

In case of the brake system of the second embodiment, as the brake pedal is depressed by the driver, the pistons are extended from the first and second calipers 20a, 20b of the first and second braking parts 40a, 40b to displace the first and second brake pads 30a, 30b toward the center of the disks 10, 10a. This enables the first and second brake pads 30a, 30b to cooperatively press the circumferential surface of the cylinder part 14 in different directions, thereby carrying out the braking operation in more efficient manner.

According to the conventional disk type brake devices, brake pads are pressed against the opposite side surfaces of a disk to acquire the desired braking force. In the prior art drum type brake devices, brake pads are installed within a rotating drum and are expanded radially outwardly in order to perform a brake operation. Therefore, no support point exists in pressing the brake pads and the pressing force of the brake pads is not effectively used in the braking process.

In contrast, according to the disk brake system of the present invention, if the brake pads 30, 30a, 30b presses the cylinder part 14, 24 of the disk 10, 10a, the pressing forces are converged on the center of the disk and act in a vertical direction such that the pressing action can be made through a tire as if a support point exists on the ground.

As a consequence, the disk brake system of the present invention provides a greater braking effect than the prior art brake devices when the same magnitude of pressing force is applied to the brake pad.

Furthermore, at each revolution of the disk, the brake pad of the present invention makes contact with the circumferential surface of the disk in a greater friction area than the conventional side pressing type disk brakes, as a result of which the kinetic energy of an automotive vehicle is converted to a thermal energy in more efficient manner, thus improving the braking performance. This ensures that the same braking performance is acquired with the use of a brake disk of reduced size, making it possible to reduce the weight of the disk.

In addition, the disk brake system of the present invention can dissipate heat with ease, thanks to the fact that a small amount of heat is generated per friction area and the disk makes contact with the air in an increased area.

In case of the conventional disk brakes, a difficulty is encountered in machining the opposite side surfaces of the disk into a planar shape and a judder phenomenon is likely to occur even with an insignificant thermal deformation of the disk. According to the disk brake system of the present invention, the circumferential surface of a disk can be machined with a higher degree of precision but with little difficulty and the disk thus produced is hardly subjected to thermal deformation during its use.

It is desirable that, for the purpose of increasing the braking effect, the circumferential surface of the disk 10, 10a be as great as possible. Other parts than the circumferential surface, e.g., the disk body, may be made thin as far as it can assure a structural integrity as illustrated in FIGS. 1 and 2.

Moreover, the circumferential surface of the cylinder part 14, 24 may be either planar as shown in FIGS. 1 through 3 or may be recess-and-protrusion surfaces 14a-14d, as illustrated in FIGS. 4a through 4d, the latter of which helps to increase a frictional contact area. In the latter case, the brake pad 30 should preferably have a contact surface whose configuration is complementary to the recess-and-protrusion surfaces 14a-14d.

Assuming that a disk has a diameter of 15inches with its cylinder part having a 5cm wide circumferential surface, the friction area in the disk brake system of the present invention is equal to 598.17cm². The friction area in the conventional brake devices having a disk of the same diameter is nothing more than 526.7cm². This means that the braking force in the disk brake system of the present invention is 13.6% greater than that of the conventional brake devices, thus enabling a disk of 15inch diameter used in the present invention to exhibit substantially the same braking performance as the conventional disk of 17inch diameter.

As described in the foregoing, the disk brake system according to the present invention is designed to press a brake pad against a circumferential surface of a brake disk in a braking operation, thus making sure that heat can be readily dissipated from a friction surface with a minimized possibility of thermal deformation of the brake disk, which would otherwise cause a judder phenomenon to the disk, thereby assuring a stabilized braking operation, an improved braking performance and a reduced weight of the brake system.

The beneficial effects provided by the present invention can be summarized as follows: 1) Minimizing the thermal deformation and abnormal wear of a disk which may be otherwise caused by the stresses created in the process of a disk casting and a braking operation; 2) Shortening the braking time through the increase of a frictional contact area between a pad and a disk; 3) Saving the production cost and reducing the weight of a disk by using a reduced amount of material for the disk; 4) Casting a disk in a simplified and cost-effective manner; and 5) Reducing the cost involved in machining a disk after its casting.

Although certain preferred embodiments of the present invention have been described herein above, it will be apparent to those skilled in the art that various changes or modifications may be made thereto within the scope of the invention defined by the appended claims.

## Claims

1. A disk brake system for automotive vehicles, comprising:
a disk with a circumferential braking surface;
a caliper having a wheel cylinder and a piston extendibly received in the wheel cylinder; and
a brake pad attached to a frontal end of the piston in a confronting relationship with the circumferential surface of the disk for making contact with the circumferential surface of the disk in response to actuation of the piston.

2. The disk brake system for automotive vehicles as recited in claim 1, wherein the caliper and the brake pad cooperate with each other to form a braking part and wherein the braking part is at least one in number.

3. The disk brake system for automotive vehicles as recited in claim 2, wherein the braking part is disposed in plural numbers in the vicinity of top, bottom, left and right peripheral edges of the disk.

4. The disk brake system for automotive vehicles as recited in claim 1, wherein the disk comprises a circular disk body, to the center of which a driving shaft is coupled, and an annular cylinder part extending in an axial direction from a periphery of the disk body to provide a circumferential surface of increased contact area with which the brake pad makes contact.

5. The disk brake system for automotive vehicles as recited in claim 1, wherein the brake pad has a curvature of radius corresponding to that of the circumferential surface of the annular cylinder part and extends a predetermined length along the circumferential surface of the annular cylinder part.

6. The disk brake system for automotive vehicles as recited in any one of claims 1 through 5, wherein the circumferential surface of the annular cylinder part and the brake pad are formed in a complementary recess-and-protrusion shape to increase a contact area between the annular cylinder part and the brake pad. 6.

7. The disk brake system for automotive vehicles as recited in claim 1, wherein the disk is of a drum shape.
